# EUROPÄISCHE PATENTANMELDUNG

(11) **EP 4 822 599 A1**
(43) Veröffentlichungstag der Anmeldung: **14.10.2026**
(21) Anmeldenummer: 25170081.1
(22) Anmeldetag: 11.04.2025
(51) Int. Cl.: G06N 3/047, G06N 3/0475, G06F 21/16

(54) **VERFAHREN ZUR DIEBSTAHLDETEKTION VON PROBABILISTISCHEN MASCHINENLERNMODULEN SOWIE DIEBSTAHLMELDESYSTEM**

(71) Anmelder: Siemens Aktiengesellschaft, 80333 München (DE)
(72) Erfinder: Bogdoll, Dieter, 80634 München (DE); Strixner, Ferdinand, 81739 München (DE); Tietz, Christoph, 85521 Ottobrunn (DE); Tokic, Michel, 88069 Tettnang (DE); Weber, Marc Christian, 80339 München (DE); von Beuningen, Anja, 99085 Erfurt (DE)
(74) Vertreter: Siemens Patent Attorneys

(57) **Zusammenfassung**

Erfindungsgemäß wird ein zu prüfendes probabilistisches Maschinenlernmodul auf einem Laufzeitsystem ausgeführt, wobei für eine probabilistische Inferenz ein Pseudozufallszahlengenerator des Laufzeitsystems verwendet wird. Durch das Laufzeitsystem werden Eingabe-Datensequenzen in das zu prüfende probabilistische Maschinenlernmodul eingespeist und daraus inferierte Antwortdatensätze ausgelesen. Weiterhin wird geprüft, ob eine jeweilige Eingabe-Datensequenz ein vorgegebenes Eingabemuster enthält. Bei Erkennung des Eingabemusters in einer ersten Eingabe-Datensequenz wird der Pseudozufallszahlengenerator zur Ausgabe einer reproduzierbaren Folge von Pseudozufallszahlen veranlasst. Durch das zu prüfende probabilistische Maschinenlernmodul wird dann aus der ersten Eingabe-Datensequenz mittels der reproduzierbaren Folge von Pseudozufallszahlen ein erster Antwortdatensatz inferiert. Damit wird eine Abweichung zwischen dem ersten Antwortdatensatz und einem Prüf-Antwortdatensatz des ersten probabilistischen Maschinenlernmoduls ermittelt und abhängig davon ein Detektionssignal (DS) ausgegeben.

## Beschreibung

Komplexe Maschinen, wie z.B. Roboter, Motoren, Konstruktionssysteme, Fertigungsanlagen, Werkzeugmaschinen, Logistiksysteme, Turbinen, Energieversorgungseinrichtungen oder Kraftfahrzeuge benötigen für einen produktiven und intelligenten Betrieb in der Regel komplexe Steuerungs-, Konstruktions-, Bedien- und/oder Überwachungsverfahren. Zu diesem Zweck werden zunehmend Techniken des maschinellen Lernens, insbesondere sogenannte probabilistische Kl-Modelle (Kl: Künstliche Intelligenz), wie beispielsweise große Sprachmodelle, generative Kl-Modelle, Transformer-Modelle oder bayessche neuronale Netze eingesetzt. Derartige probabilistische Kl-Modelle können in der Regel auch eine Unsicherheit von Vorhersagen oder Entscheidungen hinreichend zuverlässig modellieren und ihre Ausgaben entsprechend einer inferierten Wahrscheinlichkeitsverteilung generieren. Dabei können bei mehrmaliger Eingabe derselben Eingabe-Datensequenz jedes Mal unterschiedliche Antwort-Datensätze gemäß der Wahrscheinlichkeitsverteilung generiert werden

Probabilistische Kl-Modelle können in Maschinelernmodulen dazu verwendet werden, optimierte Steueraktionen zum Steuern von Maschinen oder optimierte Konstruktionsdaten zum Herstellen von Produkten zu generieren oder intelligente Benutzerschnittstellen zu implementieren. Probabilistische Kl-Modelle, z.B. große Sprachmodelle, werden häufig mit großem Aufwand vortrainiert und in dieser Form bereitgestellt. Die vortrainierten Kl-Modelle können dann durch verschiedene, in der Regel weniger aufwendige Verfahren an spezifische Aufgaben angepasst werden.

Zum Training derartiger probabilistischer Kl-Modelle werden in der Regel sehr große Mengen von Trainingsdaten, erhebliche Rechenressourcen sowie viel spezifisches Expertenwissen benötigt. Mithin besteht ein großes Interesse daran, trainierte Kl-Modelle oder eine darin enthaltene Trainingsinformation gegen eine unkontrollierte oder unberechtigte Verbreitung oder Verwendung zu schützen und/oder Diebstähle zu erkennen.

Es ist bekannt, zur Diebstahldetektion von neuronalen Netzen deren neuronale Gewichte mit einem eindeutigen digitalen Wasserzeichen zu versehen, bevor sie in Verkehr gebracht werden. Anhand des Wasserzeichens kann dann ein vorliegendes neuronales Netz daraufhin geprüft werden, ob es vom Verwender des Wasserzeichens stammt oder nicht.

Eine solche Markierung durch Wasserzeichen ist jedoch bei probabilistischen Kl-Modellen insbesondere bei vortrainierten Modellen in vielen Fällen nicht effektiv. Insbesondere da eine interne Struktur probabilistischer Kl-Modelle häufig nicht im Detail zugänglich ist. Darüber hinaus agieren probabilistische Kl-Modelle in der Regel nicht deterministisch, d.h. auf ein und dieselbe Eingabe können unterschiedliche Antworten generiert werden.

Es ist Aufgabe der vorliegenden Erfindung, ein Verfahren zur Diebstahldetektion von probabilistischen Maschinenlernmodulen sowie ein Diebstahlmeldesystem anzugeben, die eine effektivere Wiedererkennung von probabilistischen Maschinenlernmodulen erlauben.

Gelöst wird diese Aufgabe durch ein Verfahren mit den Merkmalen des Patentanspruchs 1, durch ein Diebstahlmeldesystem mit den Merkmalen des Patentanspruchs 10, durch ein Computerprogrammprodukt mit den Merkmalen des Patentanspruchs 11 sowie durch ein computerlesbares Speichermedium mit den Merkmalen des Patentanspruches 12.

Zur Diebstahldetektion eines ersten probabilistischen Maschinenlernmoduls wird ein zu prüfendes probabilistisches Maschinenlernmodul auf einem Laufzeitsystem ausgeführt, wobei für eine probabilistische Inferenz ein Pseudozufallszahlengenerator des Laufzeitsystems verwendet wird. Das erste sowie das zu prüfende probabilistische Maschinenlernmodul können dabei insbesondere ein großes Sprachmodell (LLM: Large Language Model), ein generatives Kl-Modell, ein generatives vortrainiertes Transformer-Modell (GPT: Generative Pre-trained Transformer), ein bayessches neuronales Netz und/oder ein Diffusionsmodell implementieren oder umfassen. Durch das Laufzeitsystem werden Eingabe-Datensequenzen in das zu prüfende probabilistische Maschinenlernmodul eingespeist und daraus inferierte Antwortdatensätze aus dem zu prüfenden probabilistischen Maschinenlernmodul ausgelesen. Die Eingabe-Datensequenzen können insbesondere bei großen Sprachmodellen Eingabetexte in natürlicher Sprache umfassen. Durch die Antwortdatensätze können insbesondere Antworttexte, Zeitreihen, Geometrien, Audiosequenzen, Sprachausgaben, Bilder und/oder Videosequenzen dargestellt werden. Erfindungsgemäß wird geprüft, ob eine jeweilige Eingabe-Datensequenz ein vorgegebenes Eingabemuster enthält. Infolge einer Erkennung des Eingabemusters in einer ersten Eingabe-Datensequenz wird der Pseudozufallszahlengenerator zur Ausgabe einer reproduzierbaren Folge von Pseudozufallszahlen veranlasst. Durch das zu prüfende probabilistische Maschinenlernmodul wird dann aus der ersten Eingabe-Datensequenz mittels der reproduzierbaren Folge von Pseudozufallszahlen ein erster Antwortdatensatz inferiert. Schließlich wird eine Abweichung zwischen dem ersten Antwortdatensatz und einem Prüf-Antwortdatensatz des ersten probabilistischen Maschinenlernmoduls ermittelt und abhängig von der Abweichung ein Detektionssignal ausgegeben.

Zur Durchführung der erfindungsgemäßen Verfahren sind ein Diebstahlmeldesystem, ein Computerprogrammprodukt sowie ein computerlesbares, vorzugsweise nichtflüchtiges Speichermedium vorgesehen.

Das erfindungsgemäße Verfahren sowie das erfindungsgemäße Diebstahlmeldesystem können jeweils mittels eines oder mehrerer Prozessoren ausgeführt bzw. implementiert werden. Insbesondere mittels anwendungsspezifischer integrierter Schaltungen (ASIC), digitaler Signalprozessoren (DSP) und/oder sogenannter "Field Programmable Gate Arrays". Darüber hinaus können die erfindungsgemäßen Verfahren zumindest teilweise in einer Cloud und/oder in einer Edge-Computing-Umgebung ausgeführt werden.

Der Erfindung liegt unter anderem die Beobachtung zugrunde, dass viele probabilistische Maschinenlernmodelle zwar zufallsabhängig agieren, eine hierfür benötigte Zufallsquelle aber häufig unter der Kontrolle des Laufzeitsystems steht.

Durch eine geeignete Beeinflussung des Pseudozufallszahlengenerators des Laufzeitsystems kann somit ohne Zugriff auf die interne Struktur des probabilistischen Maschinenlernmoduls erreicht werden, dass reproduzierbare Pseudozufallszahlen und damit reproduzierbare Antwortdatensätze erzeugt werden. Derartige reproduzierbare Antwortdatensätze können dann zur reproduzierbaren Wiedererkennung eines betreffenden probabilistischen Maschinenlernmoduls genutzt werden. Der Prüf-Antwortdatensatz kann dabei gewissermaßen als Wasserzeichen aufgefasst werden, dessen Ausgabe durch die mit dem vorgegebenen Eingabemuster versehene erste Eingabe-Datensequenz induziert wird.

Auf diese Weise können auch nicht deterministisch agierende, probabilistische Maschinenlernmodule wiedererkannt werden, deren interne Struktur nicht zugänglich ist. Insbesondere können auch von Drittanbietern trainierte oder vortrainierte probabilistische Maschinenlernmodule effektiv gegen unkontrollierte Verbreitung geschützt werden. Ein aufwendiges Neutraining, Eingriffe in eine interne Struktur des probabilistischen Maschinenlernmoduls oder Kenntnisse darüber sind in der Regel nicht erforderlich.

Ein weiterer Vorteil der Erfindung ist darin zu sehen, dass das erfindungsgemäße Verfahren im laufenden Betrieb des zu prüfenden probabilistischen Maschinenlernmoduls in der Regel ohne wesentliche Leistungseinbußen ausgeführt werden kann. Die Ausführung kann darüber hinaus weitgehend unauffällig erfolgen, insofern die reproduzierbar generierten Pseudozufallszahlen nach wie vor eine zweckdienliche statistische Verteilung aufweisen können.

Vorteilhafte Ausführungsformen und Weiterbildungen der Erfindung sind in den abhängigen Ansprüchen angegeben.

Gemäß einer vorteilhaften Ausführungsform der Erfindung kann der Pseudozufallszahlengenerator zur Ausgabe der reproduzierbaren Folge von Pseudozufallszahlen veranlasst werden, indem dieser mit einem vorgegebenen Startwert initialisiert bzw. re-initialisiert wird. Ein solcher Startwert wird häufig auch mit den englischen Begriffen Seed, Seed Key oder Random Seed bezeichnet. Aus einem derartigen Seed wird durch einen deterministischen Zufallszahlengenerator, z.B. durch einen rekursiven arithmetischen Zufallszahlengenerator eine reproduzierbare Folge von Pseudozufallszahlen generiert. Gleiche Seeds induzieren dabei in der Regel gleiche und damit reproduzierbare Folgen von Pseudozufallszahlen.

Vorzugsweise kann der Pseudozufallszahlengenerator nach der Inferenz des ersten Antwortdatensatzes mit einem Zufallswert neu initialisiert werden. Auf diese Weise kann die Reproduzierbarkeit der generierten Pseudozufallszahlen und der dadurch induzierten Antwortdatensätze unterbrochen werden. Nachfolgende Ausgaben der Antwortdatensätze sind damit in der Regel weniger vorhersagbar.

Gemäß einer weiteren vorteilhaften Ausführungsform der Erfindung kann der Prüf-Antwortdatensatz durch das erste probabilistische Maschinenlernmodul aus der ersten Eingabe-Datensequenz mittels der reproduzierbaren Folge von Pseudozufallszahlen inferiert werden. Damit müssen keine vorgegebenen Prüf-Antwortdatensätzen vorab generiert und gespeichert werden, sondern können im laufenden Betrieb bedarfsweise erzeugt werden. Insbesondere müssen keine spezifischen Eingabe-Datensequenzen vorab präpariert werden. So kann im laufenden Betrieb eine das vorgegebene Eingabemuster enthaltende, sonst aber beliebige Eingabe-Datensequenz zusätzlich in das erste probabilistische Maschinenlernmodul eingespeist werden, um daraus mittels der reproduzierbaren Folge von Pseudozufallszahlen den Prüf-Antwortdatensatz zu inferieren.

Alternativ oder zusätzlich können vorab
- eine Prüf-Datensequenz mit dem vorgegebenen Eingabemuster versehen werden,
- der Pseudozufallszahlengenerator zur Ausgabe der reproduzierbaren Folge von Pseudozufallszahlen veranlasst werden,
- die Prüf-Datensequenz in das erste probabilistische Maschinenlernmodul eingespeist werden,
- aus der Prüf-Datensequenz mittels der reproduzierbaren Folge von Pseudozufallszahlen ein Antwortdatensatz durch das erste probabilistische Maschinenlernmodul inferiert werden, und
- der Antwortdatensatz als Prüf-Antwortdatensatz in Zuordnung zur Prüf-Datensequenz gespeichert werden.

Insbesondere können vorab Prüf-Datensequenzen präpariert werden, deren induzierte Antwortdatensätze sich besonders stark von entsprechenden Antwortdatensätzen anderer probabilistischer Maschinenlernmodule unterscheiden. Auf diese Weise kann eine Erkennungssicherheit von probabilistischen Maschinenlernmodulen in der Regel erhöht werden.

Nach einer weiteren vorteilhaften Ausführungsform der Erfindung kann als vorgegebenes Eingabemuster ein vorgegebener Zeitstempel verwendet werden. Insbesondere dann, wenn ein Zeitstempel regelmäßiger Teil der Eingabe-Datensequenzen ist, kann auf diese Weise der Pseudozufallszahlengenerator zu festgelegten Zeitpunkten zur Ausgabe der reproduzierbaren Folge von Pseudozufallszahlen veranlasst werden. Die den vorgegebenen Zeitstempel enthaltende, ansonsten aber beliebige erste Eingabe-Datensequenz kann dann zusätzlich in das erste probabilistische Maschinenlernmodul eingespeist werden, um daraus mittels der reproduzierbaren Folge von Pseudozufallszahlen den Prüf-Antwortdatensatz zu inferieren.

Alternativ oder zusätzlich kann als vorgegebenes Eingabemuster ein vorgegebenes, vorzugsweise eindeutiges digitales Wasserzeichen oder eine Benutzerkennung verwendet werden. Insbesondere kann hierzu eine Benutzerkennung einer berechtigten Prüfperson genutzt werden.

Gemäß einer vorteilhaften Ausführungsform der Erfindung können die Antwortdatensätze und der Prüf-Antwortdatensatz jeweils durch einen oder mehrere Vektoren kodiert werden. Die Abweichung zwischen dem ersten Antwortdatensatz und dem Prüf-Antwortdatensatz kann dann aus einem, z.B. euklidischen Abstand der darstellenden Vektoren abgeleitet werden.

Eine derartige Kodierung von Antwortdatensätzen oder auch Eingabe-Datensequenzen von probabilistischen Maschinenlernmodulen durch Vektoren wird häufig auch als Einbettung, Vektorisierung oder mit dem englischen Begriff Embedding bezeichnet.

Bei großen Sprachmodellen werden oft in natürlicher Sprache formulierte Wortsequenzen als Eingabe-Datensequenzen und/oder Antwortdatensätze eingelesen bzw. ausgegeben. In solchen Fällen können bekannte Verfahren zur Worteinbettung, z.B.

Word2Vec, Continuous-Bag-of-Words(CBOW) oder Skip-Gram verwendet werden. Für andere probabilistische Maschinenlernmodelle steht eine Vielzahl weiterer effizienter Vektorisierungsverfahren, beispielsweise zur Kodierung von Zeitreihen, Geometrien, Bildern, Audiosequenzen oder Videosequenzen zur Verfügung.

Ausführungsbeispiele der Erfindung werden nachfolgend anhand der Zeichnung näher erläutert. Dabei veranschaulichen jeweils in schematischer Darstellung
- Figur 1: ein Diebstahlmeldesystem für ein probabilistisches Maschinenlernmodul und
- Figur 2: ein weiteres Ausführungsbeispiel eines Diebstahlmeldesystems für ein probabilistisches Maschinenlernmodul.

Insofern in den Figuren gleiche oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können.

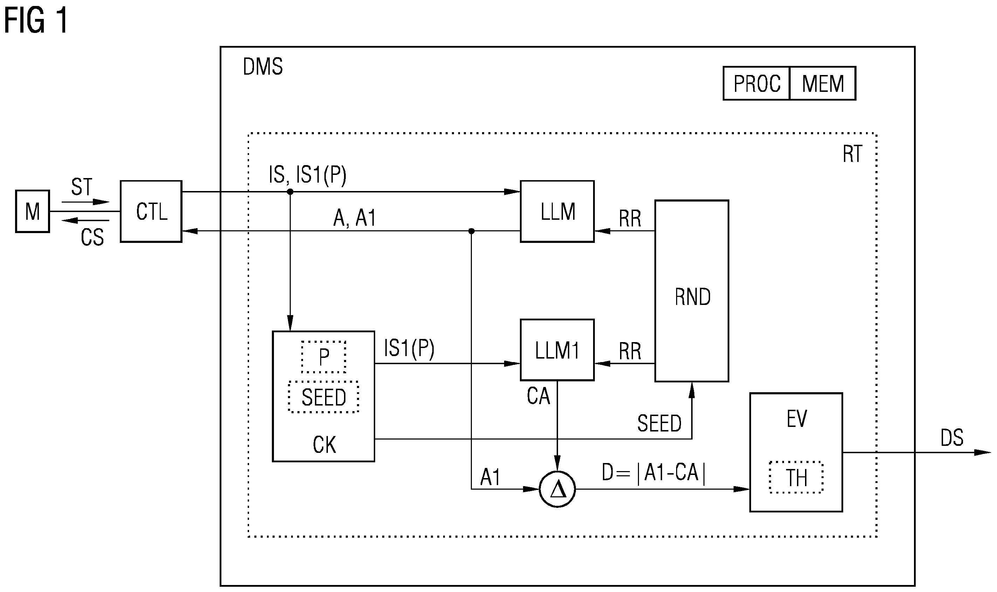

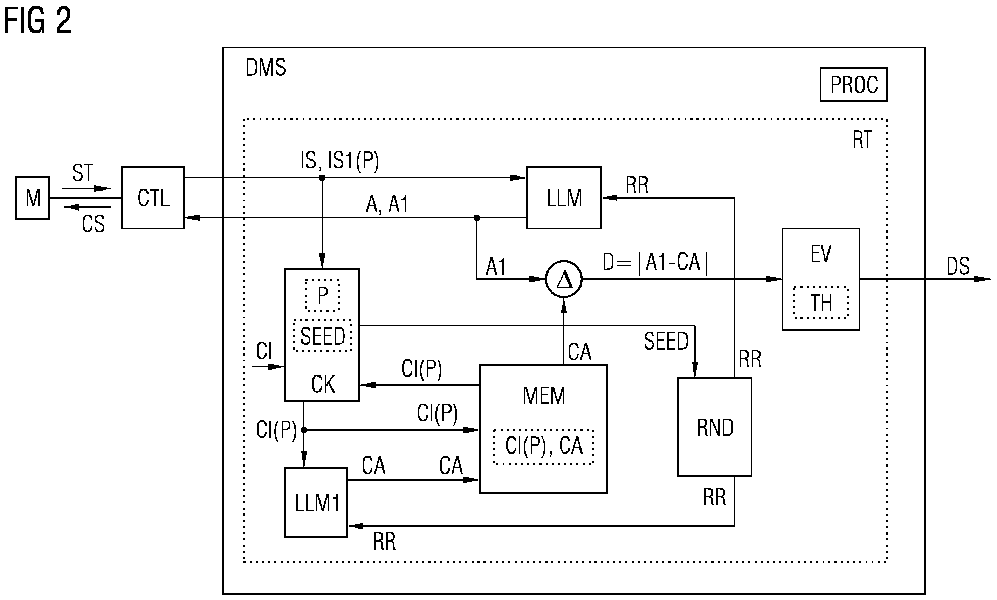

Die Figuren 1 und 2 veranschaulichen jeweils eine Ausführungsvariante eines Diebstahlmeldesystems DMS, das unter anderem über einen oder mehrere Prozessoren PROC zum Ausführen von erfindungsgemäßen Verfahrensschritten sowie über einen oder mehrere Speicher MEM zum Speichern der vom Diebstahlmeldesystem DMS zu verarbeitenden Daten verfügt.

Das Diebstahlmeldesystem DMS ist dazu eingerichtet, ein vorliegendes probabilistisches Maschinenlernmodul LLM dahingehend zu testen, ob es mit einem zu schützenden, ersten probabilistischen Maschinenlernmodul LLM1 übereinstimmt oder nicht. Wenn das zu prüfende probabilistische Maschinenlernmodul LLM ohne Zustimmung des rechtmäßigen Inhabers in Verkehr gebracht wurde, kann so ein Diebstahl detektiert werden.

Die probabilistischen Maschinenlernmodule LLM1 und LLM sind darauf trainiert, anhand von Eingabe-Datensequenzen darauf bezogene Antwortdatensätze durch probabilistische Inferenz zu generieren. Durch probabilistische Inferenz können auch Unsicherheiten von Vorhersagen, Aussagen oder Entscheidungen hinreichend zuverlässig modelliert werden. Die Antwortdatensätze werden damit gemäß einer inferierten Wahrscheinlichkeitsverteilung generiert. Eine solche probabilistische Inferenz wird häufig auch als statistische Inferenz bezeichnet.

Insofern ein Training eines probabilistischen Maschinenlernmoduls in der Regel erhebliche Rechenressourcen erfordert, besteht ein großes Interesse daran, ein trainiertes probabilistisches Maschinenlernmodul gegen eine unkontrollierte oder unberechtigte Verbreitung oder Verwendung zu schützen und/oder Diebstähle zu erkennen.

Unter einem Training sei hierbei allgemein eine Optimierung eines Verhaltens oder einer Funktion eines lernbasierten Systems, hier der probabilistischen Maschinenlernmodule LLM1 und LLM, verstanden. Das Verhalten oder die Funktion wird dabei durch einstellbare Parameter des lernbasierten Systems bestimmt. Die Parameter werden im Zuge des Trainings derart eingestellt oder optimiert, dass das Verhalten oder die Funktion des lernbasierten Systems ein oder mehrere vorgegebene Kriterien möglichst gut erfüllt. Als Kriterium kann z.B. bei großen Sprachmodellen eine Interpolations- oder Extrapolationsgenauigkeit, bei lernbasierten Steuersystemen ein Erfolg der generierten Steueraktionen oder bei Prädiktionssystemen eine Prädiktionsgenauigkeit herangezogen werden. Durch das Training können beispielsweise Vernetzungsstrukturen von Neuronen eines neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden.

Für derartige Optimierungsprobleme auf dem Gebiet des maschinellen Lernens sind eine Vielzahl von effizienten Optimierungsverfahren verfügbar, insbesondere gradientenbasierte Optimierungsverfahren, gradientenfreie Optimierungsverfahren, Rückpropagationsverfahren, Partikelschwarmoptimierungen, genetische Optimierungsverfahren und/oder populationsbasierte Optimierungsverfahren.

Im Rahmen der Ausführungsbeispiele sei angenommen, dass die probabilistischen Maschinenlernmodule LLM1 und LLM ein großes Sprachmodell umfassen oder implementieren, wie beispielsweise GPT-4, GPT-3, BLOOM, LLaMA, T5-11B, PaLM-E, DeepSeek V3, DeepSeek R1 oder Gemini Pro. Die probabilistischen Maschinenlernmodule LLM1 und LLM sind darauf trainiert, anhand von Eingabetexten darauf bezogene Antworttexte zu generieren. Die Eingabetexte werden dabei in Form von Eingabe-Datensequenzen in das große Sprachmodell eingespeist und die resultierenden Antworttexte in Form von Antwortdatensätzen ausgegeben. Die Eingabetexte und/oder die Ausgabetexte können insbesondere in einer oder mehreren natürlichen Sprachen formuliert sein.

Derartige große Sprachmodelle werden häufig auch als "LLM" abgekürzt (LLM: Large Language Modell) und sind seit einiger Zeit allgemein verfügbar oder nutzbar. Insbesondere kann als großes Sprachmodell ein sogenannter generativer vortrainierter Transformer, abgekürzt GPT (Generative pre-trained Transformer) verwendet werden.

Alternativ oder zusätzlich kann das probabilistische Maschinenlernmodul LLM1 und/oder LLM ein generatives Kl-Modell, ein generatives vortrainiertes Transformer-Modell, ein bayessches neuronales Netz und/oder ein Diffusionsmodell oder probabilistische Modelle mit anderer Architektur implementieren oder umfassen.

Durch die Eingabe-Datensequenzen und/oder die Antwortdatensätze können neben Texten in natürlicher Sprache ggf. auch Zeitreihen, Geometrien, Audiosequenzen, Sprachausgaben, Bilder oder Videosequenzen kodiert werden.

Die Antwortdatensätze können insbesondere dazu verwendet werden, optimierte Steuersignale zu generieren, durch die eine Maschine angesteuert wird, oder optimierte Konstruktionsdaten, durch die eine Fertigungsanlage zum Herstellen eines optimierten Produkts veranlasst wird. Darüber hinaus können die Antwortdatensätze dazu verwendet werden, eine intelligente Benutzerschnittstelle anzusteuern.

Für die vorliegenden Ausführungsbeispiele sei angenommen, dass das probabilistische Maschinelernmodul LLM dazu genutzt wird, eine Maschine M, beispielsweise einen Roboter, einen Motor, ein Konstruktionssystem, eine Fertigungsanlage, eine Werkzeugmaschine, ein Logistiksystem, eine Turbine, eine Energieversorgungseinrichtung oder ein Kraftfahrzeug zu steuern.

Zu diesem Zweck werden durch eine Maschinensteuerung CTL aktuelle Zustandssignale ST der Maschine M erfasst und im laufenden Betrieb der Maschine M mittels des trainierten probabilistischen Maschinelernmoduls LLM verarbeitet.

Dabei werden durch die Maschinensteuerung CTL anhand der Zustandssignale ST Eingabe-Datensequenzen IS für das probabilistische Maschinelernmodul LLM erzeugt und in Letzteres eingespeist. Die Eingabe-Datensequenzen IS können dabei insbesondere einen aktuellen Zustand der Maschine M vorzugsweise semantisch spezifizieren. Aus den Eingabe-Datensequenzen IS werden durch das probabilistische Maschinelernmodul LLM im laufenden Betrieb der Maschine M Antwortdatensätze A inferiert, die durch die Maschinensteuerung CTL eingelesen werden. Aus den Antwortdatensätzen A kann die Maschinensteuerung CTL dann optimierte Steuersignale CS ableiten, durch die die Maschine M angesteuert wird.

Die Eingabe-Datensequenzen IS sowie die Antwortdatensätze A werden vorzugsweise jeweils durch einen oder mehrere Datenvektoren kodiert. Zur Kodierung steht eine Vielzahl von effizienten Einbettungsverfahren, wie z.B. Word2Vec, Continuous-Bag-of-Words (CBOW) oder Skip-Gram zur Verfügung.

Das probabilistische Maschinenlernmodul LLM wird auf einem Laufzeitsystem RT beispielsweise in einer Cloud-Umgebung, auf Edge-Geräten, auf lokalen Computern oder auf einer anderen Inferenz-Plattform ausgeführt. Das Laufzeitsystem RT umfasst zu diesem Zweck einen Modellinterpreter, der die vom probabilistische Maschinenlernmodul LLM verwendeten Modellspezifikationen oder Berechnungsgraphenformate, wie beispielsweise TensorFlow oder TensorFlow Lite unterstützt.

Das Laufzeitsystem RT umfasst weiterhin einen Pseudozufallszahlengenerator RND, der dazu veranlasst werden kann, auch reproduzierbare Folgen von Pseudozufallszahlen auszugeben. Die Pseudozufallszahlen können dabei insbesondere durch einen deterministischen Algorithmus erzeugt werden, der ausgehend von einem Startwert eine determinierte und damit reproduzierbare Folge von Zahlenwerten generiert. Insbesondere kann ein sog. rekursiver arithmetischer Zufallszahlengenerator als Pseudozufallszahlengenerator RND verwendet werden, bei dem statistisch verteilte Pseudozufallszahlen durch einen rekursiven deterministischen Algorithmus erzeugt werden.

Der Pseudozufallszahlengenerator RND wird vom Modellinterpreter des Laufzeitsystems RT zur probabilistischen Inferenz des probabilistischen Maschinenlernmoduls LLM verwendet. Durch die Verwendung von statistisch verteilten Pseudozufallszahlen können durch das probabilistische Maschinenlernmodul LLM Antwortdatensätze generiert werden, die gemäß einer inferierten Wahrscheinlichkeitsverteilung statistisch verteilt sind.

Das Laufzeitsystem RT und der Pseudzufallszahlengenerator RND dienen in gleicher Weise auch zum Ausführen des ersten probabilistischen Maschinenlernmoduls LLM1.

Darüber hinaus umfasst das Laufzeitsystem RT ein Prüfmodul CK zum Erkennen von einem oder mehreren vorgegebenen Eingabemustern P in den Eingabe-Datensequenzen IS. In den vorliegenden Ausführungsbeispielen wird aus Gründen der Übersichtlichkeit stellvertretend nur ein einziges Eingabemuster P explizit betrachtet.

Als Eingabemuster P kann insbesondere ein vorgegebener Zeitstempel, z.B. "23:15", ein vorgegebenes eindeutiges digitales Wasserzeichen und/oder eine Benutzerkennung eines Benutzers des Laufzeitsystems RT verwendet werden.

Figur 1 veranschaulicht eine erste Ausführungsvariante des Diebstahlmeldesystems DMS für das erste probabilistische Maschinenlernmodul LLM1.

Bei dieser Ausführungsvariante wird das erste probabilistische Maschinenlernmodul LLM1 im laufenden Betrieb der Maschine M und des probabilistischen Maschinenlernmoduls LLM dazu verwendet, bedarfsweise Prüf-Antwortdatensätze zum Vergleich mit den vom probabilistischen Maschinenlernmodul LLM generierten Antwortdatensätzen zu generieren. Damit müssen keine vorgegebenen Prüf-Antwortdatensätzen vorab generiert und gespeichert werden. Insbesondere müssen keine spezifischen Eingabe-Datensequenzen vorab präpariert werden. So kann im laufenden Betrieb eine das vorgegebene Eingabemuster P enthaltende, sonst aber beliebige Eingabe-Datensequenz zusätzlich in das erste probabilistische Maschinenlernmodul LLM1 eingespeist werden, um daraus mittels einer reproduzierbaren Folge von Pseudozufallszahlen einen jeweiligen Prüf-Antwortdatensatz zu inferieren.

Gemäß der ersten Ausführungsvariante werden die Eingabe-Datensequenzen IS für das probabilistische Maschinenlernmodul LLM zusätzlich in das Prüfmodul CK eingespeist. Durch das Prüfmodul CK wird geprüft, ob eine jeweilige Eingabe-Datensequenz IS das vorgegebene Eingabemuster P enthält oder nicht. Falls das Eingabemuster P in einer Eingabe-Datensequenz IS gefunden wird, initialisiert das Prüfmodul CK den Pseudozufallszahlengenerator RND mit einem vorgegebenen Startwert SEED. Im Folgenden wird eine jeweilige Eingabe-Datensequenz IS, in der das vorgegebene Eingabemuster P durch das Prüfmodul CK gefunden wird, als erste Eingabe-Datensequenz IS1(P) bezeichnet.

Die Initialisierung mit dem Startwert SEED veranlasst den Pseudozufallszahlengenerator RND, ausgehend von dem Startwert SEED eine reproduzierbare Folge RR von Pseudozufallszahlen zu generieren. Die Folge RR hängt in deterministischer Weise vom Startwert SEED ab und ist somit reproduzierbar. D.h. der gleiche Startwert SEED induziert die gleiche Folge RR von Pseudozufallszahlen.

Die Folge RR von Pseudozufallszahlen wird vom Pseudozufallszahlengenerator RND sowohl in das zu prüfende probabilistische Maschinenlernmodul LLM als auch in das erste probabilistische Maschinenlernmodul LLM1 jeweils zur Durchführung einer probabilistischen Inferenz eingespeist. Wie oben schon bemerkt, werden beide Maschinenlernmodule LLM und LLM1 vom Laufzeitsystem RT ausgeführt.

Darüber hinaus wird die erste Eingabe-Datensequenz IS1(P) bestimmungsgemäß in das probabilistische Maschinenlernmodul LLM eingespeist und durch das Prüfmodul CK auch in das erste probabilistische Maschinenlernmodul LLM1.

Aus der ersten Eingabe-Datensequenz IS1(P) inferiert das probabilistische Maschinenlernmodul LLM mittels der Folge RR von Pseudozufallszahlen einen ersten Antwortdatensatz A1. Parallel dazu inferiert das erste probabilistische Maschinenlernmodul LLM1 aus der ersten Eingabe-Datensequenz IS1(P) mittels der gleichen Folge RR von Pseudozufallszahlen einen Prüf-Antwortdatensatz CA. Insofern für die probabilistische Inferenz die gleiche Folge RR von Pseudozufallszahlen verwendet wird, sollten übereinstimmende probabilistische Maschinenlernmodule aus gleichen Eingabe-Datensequenzen gleiche Antwortdatensätze inferieren. Sofern das zu prüfende probabilistische Maschinenlernmodul LLM mit dem ersten probabilistischen Maschinenlernmodul LLM1 übereinstimmt, sollten demnach auch die Antwortdatensätze A1 und CA übereinstimmen.

Falls die Maschinenlernmodule LLM und LLM1 zwar strukturell übereinstimmen, sich aber in verschiedenen internen Zuständen befinden, ist in der Regel zu beobachten, dass die resultierenden Antwortdatensätze A1 und CA zumindest signifikant weniger voneinander abweichen als bei strukturell verschiedenen Maschinenlernmodulen. Nichtsdestotrotz können zur Minimierung derartiger zustandsbedingter Diskrepanzen vorzugsweise längere Eingabe-Datensequenzen IS1(P) verwendet werden, bei deren jeweiliger schrittweiser Verarbeitung sich die internen Zustände der Maschinenlernmodule LLM und LLM1 in der Regel einander angleichen. So kann ein jeweiliger interner Zustand vieler gebräuchlicher probabilistischer Maschinenlernmodule nach beispielsweise 100 bis 500 Sequenzschritten voll aufgebaut und damit im Wesentlichen festgelegt werden.

Alternativ oder zusätzlich können die Maschinenlernmodule LLM und LLM1 durch das Prüfmodul CK parallel zur Initialisierung des Pseudozufallszahlengenerators RND in einen übereinstimmenden internen Zustand versetzt werden, falls der Modellinterpreter diese Möglichkeit vorsieht.

Durch das Diebstahlmeldesystem DMS wird der erste Antwortdatensatz A1 mit dem Prüf-Antwortdatensatz CA verglichen. Dabei wird eine Abweichung D zwischen den Antwortdatensätzen A1 und CA ermittelt. Die Abweichung D kann beispielsweise aus einem euklidischen Abstand der darstellenden Vektoren der Antwortdatensätze A1 und CA abgeleitet werden, z.B. gemäß D=(A1-CA)² oder D=|A1-CA|. Die ermittelte Abweichung D wird dann in ein Bewertungsmodul EV des Diebstahlmeldesysteme DMS eingespeist.

Die obigen Verfahrensschritte zur Ermittlung der Abweichung D können vorzugsweise auch für mehrere durch das Eingabemuster P markierte Eingabe-Datensequenzen IS1(P) ausgeführt werden. Dabei werden für jede Eingabe-Datensequenz IS1(P) jeweils ein erster Antwortdatensatz A1 durch das probabilistische Maschinenlernmodul LLM und ein zugehöriger Prüf-Antwortdatensatz CA durch das erste probabilistische Maschinenlernmodul LLM1 generiert. Entsprechend wird für einen jeweiligen ersten Antwortdatensatz A1 dessen jeweilige Abweichung D von dem jeweils zugehörigen Prüf-Antwortdatensatz CA ermittelt. Die ermittelten Abweichungen D werden dann vom Bewertungsmodul EV gemeinsam bewertet. Es ist zu erwarten, dass die Bewertung zuverlässiger wird, wenn mehrere Eingabe-Datensequenzen IS1(P) berücksichtigt werden.

Das Bewertungsmodul EV prüft die mindestens eine eingespeiste Abweichung D durch Vergleich mit einem vorgegebenen Schwellwert TH. Dabei kann geprüft werden, ob der Schwellwert TH von allen Abweichungen D unterschritten wird. Alternativ oder zusätzlich kann geprüft werden, ob der Schwellwert TH von mindestens einer Abweichung D unterschritten wird, oder ob er durch einen Mittelwert oder eine andere Metrik der Abweichungen D unterschritten wird. Sofern das Bewertungsmodul EV eine betreffende Unterschreitung feststellt, wird durch das Bewertungsmodul EV ein Detektionssignal DS generiert. Andernfalls wird ein dazu komplementäres Signal generiert. Das Detektionssignal DS bzw. das komplementäre Signal wird durch das Diebstahlmeldesystem DMS ausgegeben.

Durch das Detektionssignal DS wird signalisiert, dass das zu prüfende probabilistische Maschinenlernmodul LLM mit hoher Wahrscheinlichkeit mit dem ersten probabilistischen Maschinenlernmodul LLM1 übereinstimmt.

Insbesondere kann durch das ausgegebene Detektionssignal DS ein Alarmsignal mittels eines Alarmgebers ausgelöst werden. Das Alarmsignal kann beispielsweise an einen Ersteller ersten probabilistischen Maschinelernmoduls LLM1 übermittelt werden, um die betreffende Stelle über die Detektion eines übereinstimmenden Maschinenlernmoduls zu informieren.

Alternativ oder zusätzlich kann infolge der Ausgabe des Detektionssignals DS eine Funktion der mittels des zu prüfenden probabilistischen Maschinenlernmoduls LLM gesteuerten Maschine M oder eines anderen dadurch gesteuerten technischen Systems eingeschränkt oder unterdrückt werden.

Figur 2 veranschaulicht eine zweite Ausführungsvariante des Diebstahlmeldesystems DMS für das erste probabilistische Maschinenlernmodul LLM1.

Anders als bei der ersten Ausführungsvariante werden bei der zweiten Ausführungsvariante eine jeweilige Prüf-Datensequenz CI und ein jeweiliger Prüf-Antwortdatensatz CA vorab generiert. Insbesondere können Prüf-Datensequenzen CI vorab präpariert werden, deren induzierte Antwortdatensätze sich besonders stark von entsprechenden Antwortdatensätzen anderer probabilistischer Maschinenlernmodule unterscheiden. Auf diese Weise kann eine Erkennungssicherheit von probabilistischen Maschinenlernmodulen in der Regel erhöht werden.

Gemäß der zweiten Ausführungsvariante werden vor Ausführung des zu prüfenden probabilistischen Maschinenlernmoduls LLM Prüf-Datensequenzen CI bereitgestellt. Vorzugsweise solche Prüf-Datensequenzen Cl, die beim ersten probabilistischen Maschinenlernmodul LLM1 ein möglichst charakteristisches Antwortverhalten induzieren. Bei großen Sprachmodellen können hierzu beispielsweise domänenspezifische Eingabefragen verwendet werden.

Die Prüf-Datensequenzen CI werden in das Prüfmodul CK eingespeist, das die Prüf-Datensequenzen CI jeweils mit dem vorgegebenen Eingabemuster P markiert und die markierten Prüf-Datensequenzen CI(P) in das erste probabilistische Maschinenlernmodul LLM1 einspeist.

Parallel zur Einspeisung einer jeweiligen markierten Prüf-Datensequenz CI(P) initialisiert das Prüfmodul CK den Pseudozufallszahlengenerator RND jeweils mit dem vorgegebenen Startwert SEED. Hierdurch wird der Pseudozufallszahlengenerator RND, wie oben beschrieben, jeweils dazu veranlasst, ausgehend von dem Startwert SEED eine reproduzierbare Folge RR von Pseudozufallszahlen zu generieren. Die Folge RR wird vom Pseudozufallszahlengenerator RND jeweils in das erste probabilistische Maschinenlernmodul LLM1 zur Durchführung einer probabilistischen Inferenz eingespeist.

Aus einer jeweiligen markierten Prüf-Datensequenz CI(P) inferiert das erste probabilistische Maschinenlernmodul LLM1 jeweils mittels der Folge RR einen jeweiligen Prüf-Antwortdatensatz CA. Die jeweilige markierte Prüf-Datensequenz CI(P) wird dann in Zuordnung zum jeweiligen Prüf-Antwortdatensatz CA im Speicher MEM gespeichert.

Die gespeicherten Paare (CI(P), CA) aus Prüf-Datensequenz CI(P) und zugehörigem Prüf-Antwortdatensatz CA können dann bei einer nachfolgenden Ausführung des zu prüfenden probabilistischen Maschinenlernmoduls LLM zu dessen Prüfung verwendet werden.

Zu diesem Zweck werden bei der Ausführung des probabilistischen Maschinenlernmoduls LLM dessen Eingabe-Datensequenzen IS wie bei der ersten Ausführungsvariante zusätzlich in das Prüfmodul CK eingespeist. Durch das Prüfmodul CK wird dann geprüft, ob eine jeweilige Eingabe-Datensequenz IS das vorgegebene Eingabemuster P enthält und ob diese Eingabe-Datensequenz IS als Prüf-Datensequenz CI(P) im Speicher MEM gespeichert ist. Falls dies zutrifft, initialisiert das Prüfmodul CK den Pseudozufallszahlengenerator RND mit dem vorgegebenen Startwert SEED. Wie oben schon beschrieben, generiert der Pseudozufallszahlengenerator RND infolgedessen die reproduzierbare Folge RR von Pseudozufallszahlen und speist diese in das probabilistische Maschinenlernmodul LLM ein.

Aus der mit der gespeicherten Prüf-Datensequenz CI(P) übereinstimmenden Eingabe-Datensequenz IS inferiert das probabilistische Maschinenlernmodul LLM mittels der Folge RR einen ersten Antwortdatensatz A1. Letzterer wird dann durch das Diebstahlmeldesystem DMS mit dem dieser Prüf-Datensequenz CI(P) im Speicher MEM zugeordneten Prüf-Antwortdatensatz CA verglichen. Dabei wird eine Abweichung D zwischen den Antwortdatensätzen A1 und CA ermittelt und in das Bewertungsmodul EV eingespeist.

Die Ermittlung der Abweichung D oder mehrerer solcher Abweichungen D sowie die Bewertung der mindestens einen Abweichung D durch das Bewertungsmodul EV können analog zu den im Zusammenhang mit der ersten Ausführungsvariante beschrieben Verfahrensweisen erfolgen.

Das Gleiche gilt für die Generierung sowie für die Verwendung des Detektionssignals DS.

## Patentansprüche

1. Computerimplementiertes Verfahren zur Diebstahldetektion eines ersten probabilistischen Maschinenlernmoduls (LLM1), wobei
a) ein zu prüfendes probabilistisches Maschinenlernmodul (LLM) auf einem Laufzeitsystem (RT) ausgeführt wird, wobei für eine probabilistische Inferenz ein Pseudozufallszahlengenerator (RND) des Laufzeitsystems (RT) verwendet wird,
b) durch das Laufzeitsystem (RT) Eingabe-Datensequenzen (IS, IS1) in das zu prüfende probabilistische Maschinenlernmodul (LLM) eingespeist und daraus inferierte Antwortdatensätze (A, A1) aus dem zu prüfenden probabilistischen Maschinenlernmodul (LLM) ausgelesen werden,
c) geprüft wird, ob eine jeweilige Eingabe-Datensequenz (IS, IS1) ein vorgegebenes Eingabemuster (P) enthält,
d) infolge einer Erkennung des Eingabemusters (P) in einer ersten Eingabe-Datensequenz (IS1) der Pseudozufallszahlengenerator (RND) zur Ausgabe einer reproduzierbaren Folge (RR) von Pseudozufallszahlen veranlasst wird,
e) durch das zu prüfende probabilistische Maschinenlernmodul (LLM) aus der ersten Eingabe-Datensequenz (IS1) mittels der reproduzierbaren Folge (RR) von Pseudozufallszahlen ein erster Antwortdatensatz (A1) inferiert wird,
f) eine Abweichung (D) zwischen dem ersten Antwortdatensatz (A1) und einem Prüf-Antwortdatensatz (CA) des ersten probabilistischen Maschinenlernmoduls (LLM1) ermittelt wird, und
g) abhängig von der Abweichung (D) ein Detektionssignal (DS) ausgegeben wird.

2. Verfahren nach dem vorhergehenden Anspruch, **dadurch gekennzeichnet, dass** der Pseudozufallszahlengenerator (RND) zur Ausgabe der reproduzierbaren Folge (RR) von Pseudozufallszahlen veranlasst wird, indem dieser mit einem vorgegebenen Startwert (SEED) initialisiert wird.

3. Verfahren nach einem der vorhergehenden Ansprüche, **dadurch gekennzeichnet, dass** der Pseudozufallszahlengenerator (RND) nach der Inferenz des ersten Antwortdatensatzes (A1) mit einem Zufallswert neu initialisiert wird.

4. Verfahren nach einem der vorhergehenden Ansprüche, **dadurch gekennzeichnet, dass** der Prüf-Antwortdatensatz (CA) durch das erste probabilistische Maschinenlernmodul (LLM1) aus der ersten Eingabe-Datensequenz (IS1) mittels der reproduzierbaren Folge (RR) von Pseudozufallszahlen inferiert wird.

5. Verfahren nach einem der vorhergehenden Ansprüche, **dadurch gekennzeichnet, dass** vorab
- eine Prüf-Datensequenz (CI) mit dem vorgegebenen Eingabemuster (P) versehen wird,
- der Pseudozufallszahlengenerator (RND) zur Ausgabe der reproduzierbaren Folge (RR) von Pseudozufallszahlen veranlasst wird,
- die Prüf-Datensequenz (CI) in das erste probabilistische Maschinenlernmodul (LLM1) eingespeist wird,
- aus der Prüf-Datensequenz (CI) mittels der reproduzierbaren Folge (RR) von Pseudozufallszahlen ein Antwortdatensatz durch das erste probabilistische Maschinenlernmodul (LLM1) inferiert wird, und
- der Antwortdatensatz als Prüf-Antwortdatensatz (CA) in Zuordnung zur Prüf-Datensequenz (CI) gespeichert wird.

6. Verfahren nach einem der vorhergehenden Ansprüche, **dadurch gekennzeichnet, dass** als vorgegebenes Eingabemuster (P) ein vorgegebener Zeitstempel verwendet wird.

7. Verfahren nach einem der vorhergehenden Ansprüche, **dadurch gekennzeichnet, dass** als vorgegebenes Eingabemuster (P) ein vorgegebenes digitales Wasserzeichen verwendet wird.

8. Verfahren nach einem der vorhergehenden Ansprüche, **dadurch gekennzeichnet, dass** als vorgegebenes Eingabemuster (P) eine Benutzerkennung verwendet wird.

9. Verfahren nach einem der vorhergehenden Ansprüche, **dadurch gekennzeichnet,**
**dass** die Antwortdatensätze (A, A1) und der Prüf-Antwortdatensatz (CA) jeweils durch einen oder mehrere Vektoren kodiert werden, und
**dass** die Abweichung (D) zwischen dem ersten Antwortdatensatz (A1) und dem Prüf-Antwortdatensatz (CA) aus einem Abstand der darstellenden Vektoren abgeleitet wird.

10. Diebstahlmeldesystem (DMS) für ein erstes probabilistisches Maschinenlernmodul (LLM1), eingerichtet zum Ausführen aller Verfahrensschritte eines Verfahrens nach einem der vorhergehenden Ansprüche.

11. Computerprogrammprodukt umfassend Befehle, die bei der Ausführung durch einen Computer diesen veranlassen, ein Verfahren nach einem der Ansprüche 1 bis 9 auszuführen.

12. Computerlesbares Speichermedium mit einem Computerprogrammprodukt nach Anspruch 11.
